# EUROPÄISCHE PATENTSCHRIFT

(11) **EP 4 328 160 B1**
(45) Veröffentlichungstag und Bekanntmachung des Hinweises auf die Patenterteilung: **22.04.2026**
(21) Anmeldenummer: 23193333.4
(22) Anmeldetag: 24.08.2023
(51) Int. Cl.: B65G 47/14, B65G 47/256, B67B 3/064

(54) **VORRICHTUNG UND VERFAHREN ZUM ORIENTIERTEN BEREITSTELLEN VON BEHÄLTERVERSCHLÜSSEN**
DEVICE AND METHOD FOR ORIENTED PROVISION OF CONTAINER CLOSURES
DISPOSITIF ET PROCÉDÉ DE FOURNITURE ORIENTÉE DE FERMETURES DE RÉCIPIENTS

(30) Priorität: 24.08.2022 DE 102022121443
(43) Veröffentlichungstag der Anmeldung: 28.02.2024
(73) Patentinhaber: KRONES AG, 93073 Neutraubling (DE)
(72) Erfinder: Boehm, Christian, 93073 Neutraubling (DE); Brikmann, Max, 93073 Neutraubling (DE)
(74) Vertreter: Nordmeyer, Philipp Werner

(56) Entgegenhaltungen:
- EP-A1- 3 476 779
- CH-A- 543 343
- CN-A- 102 219 114
- CN-A- 111 232 610
- DE-A1- 2 117 208
- JP-A- 2017 197 367
- US-A- 3 874 740

## Beschreibung

### Technisches Gebiet

Die vorliegende Erfindung betrifft eine Vorrichtung und ein Verfahren zur orientierten Bereitstellung von Behälterverschlüssen, vorzugsweise in einer Getränkeabfüllanlage.

### Stand der Technik

Es sind Verschließvorrichtungen zum Applizieren von Verschlüssen auf mit einem Füllprodukt befüllten Behältern, beispielsweise zum Aufbringen von Kronkorken oder Drehverschlüssen auf Flaschen, in Rundläuferbauweise bekannt. Die Verschließvorrichtung weist ein rotierendes Karussell auf, an dessen Umfang mehrere Verschließorgane und zugeordnete Behälterhalterungen montiert sind. Der zu verschließende Behälter wird über eine Behälterzufuhr, beispielsweise über einen Transferstern, an eine Behälterhalterung des Karussells übergeben und mittels des zugeordneten Verschließorgans während des Transports entlang eines Teilkreises des Karussells mit einem Verschluss verschlossen.

Die Bereitstellung der Verschlüsse kann über ein Sortierwerk erfolgen, in dem die Verschlüsse vereinzelt und korrekt ausgerichtet werden. Dies wird beispielsweise mittels einer sich drehenden Sortierscheibe erreicht, an deren Außenumfang sich halbrunde Aufnahmetaschen befinden. Die Verschlüsse werden auf die sich drehende Scheibe aufgegeben, durch die Drehung nach außen befördert und gelangen so in die Aufnahmetaschen. Anschließend werden die Verschlüsse beispielsweise über eine sternradförmige Zuführvorrichtung oder einen Zufuhrkanal an die Verschließvorrichtung transportiert.

Es ist bekannt, die korrekte Ausrichtung der Verschlüsse im Sortierwerk mittels eines kapazitiven oder optischen Sensors, der sich üblicherweise am Boden des Sortierwerks befindet, zu prüfen. Falls der Verschluss in der Aufnahmetasche nicht korrekt orientiert ist, etwa wenn die Verschlussöffnung nach unten zeigt, wird der Sensor nicht belegt und der Verschluss wird mittels einer Luftdüse aus der Sortiertasche ausgeblasen, gegen ein Abprallblech im Deckel des Sortierwerks.

Es sind ferner Techniken zum Ausblasen nicht korrekt ausgerichteter Verschlüsse im Sortierwerk bekannt, die ohne die Verwendung von Sensoren zur Verschlussdetektion auskommen. So beschreibt die EP 1 127 834 A1 eine Sortiervorrichtung für zylindrische Gegenstände, die in einer teilweise luftdurchlässigen Rinne transportiert werden. Unterhalb der Rinne sind nach oben gerichtete Druckluftdüsen angeordnet, wodurch Gegenstände, deren Deckfläche zur Rinne orientiert ist, angesaugt werden und in der Rinne verbleiben. Gegenstände, deren Öffnung zur Rinne orientiert ist, werden aus der Rinne geblasen. Eine alternative Vorrichtung zum Ausblasen fehlorientierter Verschlüsse geht aus der US 3,707,217 A hervor.

Das Ausblasen fehlorientierter Verschlüsse im Sortierwerk mittels Druckluft steht einer weitergehenden Steigerung der Drehzahl der Sortierscheibe bzw. Transportgeschwindigkeit der Verschlüsse entgegen, da die Zeit zum Ausblassen fehlorientierter Verschlüsse ab einer bestimmten Geschwindigkeit zu gering ist. Auch kommen in der Praxis Verschlussgeometrien vor, die dazu führen, dass sich Verschlüsse quer in die Aufnahmetaschen legen können. Im Fall einer sensorgestützten Ausblasvorrichtung kann es vorkommen, dass eine solche Lage fehlerhaft als korrekte Ausrichtung detektiert wird, wenngleich der Verschluss quer in der Tasche liegt.

Die DE 2 117 208 A1 beschreibt eine Kappenauswahlrinne, die falsch ausgerichtete Kappen aus einer sich bewegenden Kappenreihe, beispielsweise zur Zuführung von Verschlusskappen zu einer Verschließmaschine, beseitigt. Hierbei werden falsch ausgerichtete Kappen aus der Reihe der wandernden Kappen herausgehoben.

Die EP 3 476 779 A1 offenbart eine Vorrichtung zur orientierten Bereitstellung von Behälterverschlüssen nach dem Oberbegriff des Anspruchs 1 und ein Verfahren zur orientierten Bereitstellung von Behälterverschlüssen nach dem Oberbegriff des Anspruchs 11.

### Darstellung der Erfindung

Eine Aufgabe der vorliegenden Erfindung besteht darin, eine verbesserte Vorrichtung und ein verbessertes Verfahren zur orientierten Bereitstellung von Behälterverschlüssen, vorzugsweise in einer Getränkeabfüllanlage, anzugeben.

Die Aufgabe wird durch eine Vorrichtung mit den Merkmalen des Anspruchs 1 sowie ein Verfahren mit den Merkmalen des nebengeordneten Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung, hierin auch als "Sortiervorrichtung" oder "Sortierwerk" bezeichnet, dient zur orientierten Bereitstellung von Behälterverschlüssen, d.h. die Behälterverschlüsse sollen durch die Vorrichtung in eine definierte Ausrichtung und gegebenenfalls Teilung gebracht und in diesem Sinne sortiert werden, so dass die Behälterverschlüsse korrekt orientiert einer Verschließvorrichtung zuführbar sind.

Die Vorrichtung kommt besonders bevorzugt in einer Getränkeabfüllanlage zur Anwendung, beispielsweise zum Abfüllen von Wasser (still oder karbonisiert), Bier, Saft, Softdrinks, Smoothies, Milchprodukten usw. in entsprechende Behälter und Verschließen der Behälter mit den Behälterverschlüssen.

Die Vorrichtung umfasst einen Transportabschnitt, der eingerichtet ist, um die Behälterverschlüsse entlang eines Förderwegs zu transportieren, und eine Korrektureinrichtung, die eingerichtet ist, um einen fehlorientierten Behälterverschluss aus dem Förderweg zu entfernen.

Die Korrektureinrichtung weist erfindungsgemäß einen Anhebeabschnitt auf, der eingerichtet ist, um den fehlorientierten Behälterverschluss für das Entfernen aus dem Förderweg anzuheben. In anderen Worten, der Anhebeabschnitt ermöglicht, unterstützt oder vereinfacht das Entfernen des Behälterverschlusses aus dem Förderweg.

Indem der Anhebeabschnitt fehlorientierte Behälterverschlüsse anhebt (relativ zum Förderweg gesehen), werden diese in eine Lage gebracht, in der sie zuverlässig und wohldefiniert aus dem Förderweg entfernt werden können, während korrekt orientierte Behälterverschlüsse auf dem Förderweg verbleiben. Auf einen Sensor zur Detektion von fehlorientierten Verschlüssen kann verzichtet werden.

Dadurch, dass die fehlorientierten Behälterverschlüsse durch das Anheben aktiv in eine für das Entfernen optimierte Lage gebracht werden, sind höhere Transportgeschwindigkeiten und damit höhere Leistungen der Vorrichtung realisierbar. Zudem können Verschlussgeometrien verarbeitet werden, die mit bisherigen Sortierwerken nicht möglich waren. Die Behälterverschlüsse werden zudem weniger beschädigt, da diese beispielsweise nicht gegen ein Abprallblech geblasen werden müssen.

Räumliche Bezeichnungen wie "unterhalb", "oberhalb", "anheben", "absenken" usw. beziehen sich auf die Schwerkraftrichtung, sofern aus dem Kontext nichts anderes hervorgeht.

Die Korrektureinrichtung weist einen Blasabschnitt auf, der eingerichtet ist, um den fehlorientierten Behälterverschluss mittels eines Gasstroms, vorzugsweise mittels eines Luftstroms bzw. Druckluft, aus dem Förderweg zu blasen. Indem der Anhebeabschnitt fehlorientierte Behälterverschlüsse anhebt (relativ zum Förderweg gesehen), werden diese in eine Lage gebracht, in der sie zuverlässig und wohldefiniert aus dem Förderweg geblasen werden können, während korrekt orientierte Behälterverschlüsse auf dem Förderweg verbleiben.

Derr Transportabschnitt umfasst eine in Drehung versetzbare Sortierscheibe mit am Außenumfang angeordneten Aufnahmetaschen, wobei die Aufnahmetaschen eingerichtet sind, um je einen Behälterverschluss aufzunehmen. Die Aufnahmetaschen sind vorzugsweise halbrunde Ausnehmungen. Die Behälterverschlüsse werden über eine geeignete Zuführung auf die Sortierscheibe aufgegeben, beispielsweise ungefähr zentral über eine Rutsche, wobei sie durch die Drehung der Sortierscheibe radial nach außen treiben, bis sie entsprechend in die Aufnahmetaschen fallen. Somit werden die zunächst zufällig orientiert angelieferten Behälterverschlüsse auf maschinenbaulich einfache und zuverlässige Weise vorsortiert, d.h. überwiegend in eine gewünschte Ausrichtung und Teilung gebracht.

Vorzugsweise umfasst der Transportabschnitt eine unterhalb der Sortierscheibe angeordnete Bodenplatte, auf der die von den Aufnahmetaschen aufgenommenen Behälterverschlüsse aufliegen und durch Drehung der Sortierscheibe entlang des Förderwegs, der in diesem Fall kreisförmig ist, transportiert werden. Die Bodenplatte ist relativ zur Sortierscheibe stationär angeordnet. Neben der bodenseitigen Führung durch die Bodenplatte kann eine Außenführung installiert sein, welche die Behälterverschlüsse an der radialen Außenseite (in Bezug auf die Sortierscheibe gesehen) führen.

Der Blasabschnitt ist radial außerhalb der Sortierscheibe angeordnet und so eingerichtet, dass der Gasstrom radial nach innen gerichtet ist, so dass der fehlorientierte Behälterverschluss auf die Sortierscheibe geblasen wird. Auf diese Weise wird der fehlorientierte Behälterverschluss so lange in den Sortiervorgang zurückgeführt, bis er korrekt ausgerichtet auf den Förderweg gelangt. Der Sortiervorgang erzeugt somit keinen Ausschluss.

Der Blasabschnitt und/oder die Düsen desselben sind vorzugsweise verstellbar angeordnet, wodurch der Gasstrom an unterschiedliche Verschlussgeometrien anpassbar und für einen zuverlässigen Betrieb nachjustierbar ist.

Vorzugsweise ist der Anhebeabschnitt am Außenumfang der Sortierscheibe angeordnet und so eingerichtet, dass der fehlorientierte Behälterverschluss während des Transports durch die Sortierscheibe zumindest abschnittsweise auf den Anhebeabschnitt aufgeschoben und dadurch entsprechend angehoben wird. Das Anheben des fehlorientierten Behälterverschlusses für das optimierte Ausblasen erfolgt so auf maschinenbaulich einfache und zuverlässige Weise.

Aus dem gleichen Grund ist der Anhebeabschnitt vorzugsweise als Kurvenelement mit einer klingenförmigen Führung, die während des Anhebens des fehlorientierten Behälterverschlusses mit diesem in Kontakt steht, ausgebildet. Das Kurvenelement ist entsprechend relativ feststehend ausgebildet und wird während des Betriebs zum Anheben eines fehlorientierten Verschlusses nicht bewegt. Mit anderen Worten ist das Kurvenelement als feststehende Gleitschiene ausgebildet, die das selektive Anheben der daran vorbeifahrenden fehlorientierten Verschlüsse nur aufgrund der Geometrie erreicht.

Vorzugsweise ist der Anhebeabschnitt verstellbar angeordnet, insbesondere in axialer Richtung der Sortierscheibe, wodurch die Korrektureinrichtung an unterschiedliche Verschlussgeometrien anpassbar und für einen zuverlässigen Betrieb nachjustierbar ist.

Vorzugsweise ist der Anhebeabschnitt in eine Arbeitsposition, in welcher der Anhebeabschnitt den fehlorientierten Behälterverschluss anhebt, und eine Ruheposition verfahrbar, in welcher der Anhebeabschnitt keine Wirkung auf den fehlorientierten Behälterverschluss entfaltet. Auf diese Weise kann der Anhebeabschnitt bei Nichtgebrauch aus dem Prozess entfernt werden.

Vorzugsweise ist die Korrektureinrichtung so eingerichtet, dass der Anhebeabschnitt einen korrekt ausgerichteten Behälterverschluss nicht anhebt, während der fehlorientierte Behälterverschluss durch den Anhebeabschnitt manipuliert bzw. angehoben wird. In diesem Fall kann auf einen Sensor zur Detektion von Fehlorientierungen vollständig verzichtet werden. Anstatt einer Verschlusserkennung mittels eines Sensors hat der Anhebeabschnitt den Zweck, ausschließlich fehlorientierte Behälterverschlüsse anzuheben, welche dann mittels des Blasabschnitts aus dem Förderweg geblasen werden.

Aus diesem Grund ist gemäß einer besonders bevorzugten Ausführungsvariante kein Sensor zur Detektion fehlorientierter Behälterverschlüsse vorgesehen. Die Korrektureinrichtung kann daher sensorfrei ausgebildet werden, was zu einem vereinfachten Aufbau führt.

Vorzugsweise ist der Transportabschnitt quer zum Förderweg geneigt, wodurch das Heraustragen fehlorientierter Behälterverschlüsse unterstützt wird. Insbesondere ist die Sortierscheibe in diesem Fall relativ zur Horizontalen geneigt.

Der Neigungsgrad ist vorzugsweise so eingestellt, dass der fehlorientierte Behälterverschluss durch das Anheben durch den Anhebeabschnitt selbstständig, d.h. insbesondere ohne Herausblasen durch einen Blasabschnitt, aus dem Förderweg kippt. Es ist somit alternativ möglich, dass fehlorientierte Behälterverschlüsse vollständig aus dem Förderweg gehoben werden. Ein Herausblasen wäre dann nicht unbedingt nötig. Diese Alternative ist insbesondere dann gut umsetzbar, wenn der Schwerpunkt der Behälterverschlüsse von einer geometrischen Mitte stark verschoben ist, beispielsweise wenn sich der Schwerpunkt im Bereich eines Deckels befindet, so dass der Behälterverschluss schneller über den Kipppunkt kommt als ein korrekt orientierter Behälterverschluss.

Die oben genannte Aufgabe wird ferner durch ein Verfahren zur orientierten Bereitstellung von Behälterverschlüssen, vorzugsweise in einer Getränkeabfüllanlage, gelöst, wobei das Verfahren aufweist: Transportieren der Behälterverschlüsse entlang eines Förderwegs mittels eines Transportabschnitts, wobei der Transportabschnitt eine in Drehung versetzte Sortierscheibe mit am Außenumfang angeordneten Aufnahmetaschen, die je einen Behälterverschluss aufnehmen, aufweist; Entfernen eines fehlorientierten Behälterverschlusses aus dem Förderweg mittels einer Korrektureinrichtung. Das Verfahren zeichnet sich dadurch aus, dass der fehlorientierte Behälterverschluss für das Entfernen aus dem Förderweg mittels eines Anhebeabschnitts angehoben wird.

Die Merkmale, technischen Wirkungen, Vorteile sowie Ausführungsbeispiele, die in Bezug auf die Vorrichtung beschrieben wurden, gelten analog für das Verfahren. Insbesondere kann das Verfahren mit einer Vorrichtung gemäß einem der vorstehend dargelegten Ausführungsvarianten durchgeführt werden.

Der fehlorientierte Behälterverschluss wird aus den oben genannten Gründen mittels eines Gasstroms, vorzugsweise Luftstroms, eines Blasabschnitts aus dem Förderweg geblasen, wobei der fehlorientierte Behälterverschluss für das Ausblasen aus dem Förderweg mittels des Anhebeabschnitts angehoben wird. Der Blasabschnitt ist ferner radial außerhalb der Sortierscheibe angeordnet und so eingerichtet, dass der Gasstrom radial nach innen gerichtet ist, so dass der fehlorientierte Behälterverschluss auf die Sortierscheibe geblasen wird.

Vorzugsweise sind die Behälterverschlüsse Drehverschlüsse, beispielsweise aus Kunststoff oder Aluminium, mit einer rotationssymmetrischen Form, da diese für das Ausblasen, insbesondere sensorfreie Ausblasen, besonders geeignet sind.

Vorzugsweise weisen die Behälterverschlüsse jeweils einen hohlzylindrischen Abschnitt und einen sich daran anschließenden kegelstumpfförmigen Abschnitt auf. Damit kann auf mechanisch einfache Weise sichergestellt werden, dass der Anhebeabschnitt einen korrekt ausgerichteten Behälterverschluss nicht anhebt, während der fehlorientierte Behälterverschluss durch den Anhebeabschnitt manipuliert wird.

Weitere Vorteile und Merkmale der vorliegenden Erfindung sind aus der folgenden Beschreibung bevorzugter Ausführungsbeispiele ersichtlich. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen Ausschnitt einer Vorrichtung zur orientierten Bereitstellung von Behälterverschlüssen, umfassend einen Transportabschnitt mit einer Sortierscheibe sowie eine Korrektureinrichtung;
- Figur 2: die Vorrichtung gemäß Figur 1 mit einem von einer Aufnahmetasche der Sortierscheibe in korrekter Ausrichtung aufgenommenen Behälterverschluss;
- Figur 3: die Vorrichtung gemäß Figur 1 mit einem von einer Aufnahmetasche der Sortierscheibe in einer fehlerhaften Orientierung aufgenommenen Behälterverschluss;
- Figur 4: die Vorrichtung gemäß Figur 1 mit einem von einer Aufnahmetasche der Sortierscheibe in einer anderen fehlerhaften Orientierung aufgenommenen Behälterverschluss;
- Figur 5: einen klingenförmigen Anhebeabschnitt; und
- Figur 6: einen Ausschnitt einer Vorrichtung zur orientierten Bereitstellung von Behälterverschlüssen, die nicht Teil der vorliegenden Erfindung ist, umfassend einen Transportabschnitt mit einer Sortierscheibe sowie eine Korrektureinrichtung gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanz zu vermeiden.

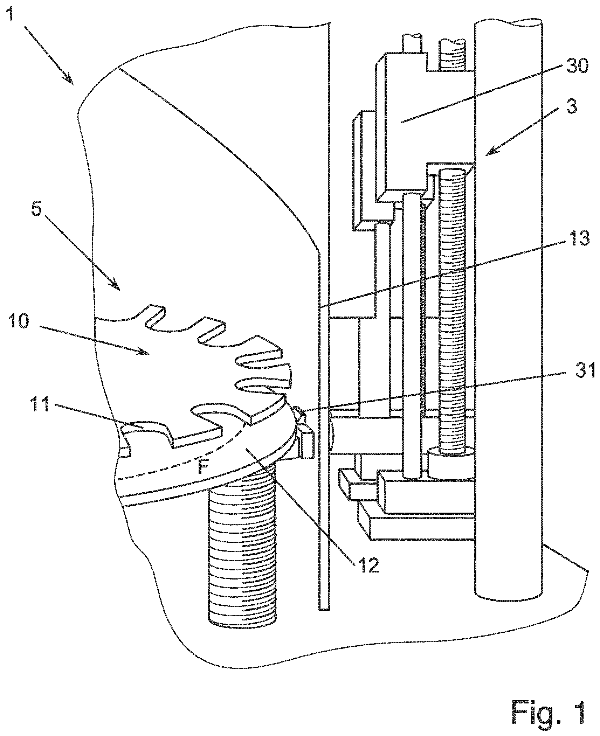

Die Figur 1 zeigt einen Ausschnitt einer Vorrichtung 1 zur Bereitstellung von orientierten Behälterverschlüssen 2. Die Vorrichtung 1, hierin auch als "Sortiervorrichtung" oder "Sortierwerk" bezeichnet, dient dazu, die Behälterverschlüsse 2 in eine definierte Ausrichtung und gegebenenfalls Teilung zu bringen, so dass die Behälterverschlüsse 2 korrekt orientiert einer Verschließvorrichtung (in den Figuren nicht gezeigt) zuführbar sind.

Die Sortiervorrichtung 1 kommt besonders bevorzugt in einer Getränkeabfüllanlage zur Anwendung, beispielsweise zum Abfüllen von Wasser (still oder karbonisiert), Bier, Saft, Softdrinks, Smoothies, Milchprodukten usw. in entsprechende Behälter und Verschließen der Behälter mit den Behälterverschlüssen 2.

Die Sortiervorrichtung 1 weist eine Sortierscheibe 10 mit Aufnahmetaschen 11, die vorzugsweise halbrunde Ausnehmungen sind, an deren Außenumfang auf. Die Sortierscheibe 10 ist drehbar gelagert und über einen geeigneten Antrieb, vorzugsweise einen Elektromotor, in Rotation versetzbar.

Die Behälterverschlüsse 2 werden über eine geeignete Zuführung auf die Sortierscheibe 10 aufgegeben, beispielsweise ungefähr zentral über eine Rutsche (in den Figuren nicht gezeigt), und durch die Drehung der Sortierscheibe 10 radial nach außen befördert, bis die Behälterverschlüsse 2 entsprechend in die Aufnahmetaschen 11 fallen. Unterhalb der Sortierscheibe 10 ist eine Bodenplatte 12 angeordnet, auf der die so von den Aufnahmetaschen 11 aufgenommenen Behälterverschlüsse 2 aufliegen und entlang einer definierten kreisförmigen Trajektorie gleiten. Zu diesem Zweck kann eine Außenführung 13 installiert sein, welche die Behälterverschlüsse 2 an der radialen Außenseite führen.

Die Sortierscheibe 10 kann geneigt installiert sein, so dass die Behälterverschlüsse 2 innerhalb eines definierten Bereichs in Umfangsrichtung gesehen in die Aufnahmetaschen 11 fallen.

Die Sortierscheibe 10, die Aufnahmetaschen 11, die Bodenplatte 12 und die Außenführung 13 bilden gemeinsam einen Transportabschnitt 5, der die Behälterverschlüsse 2 entlang eines definierten Förderwegs F, im vorliegenden Ausführungsbeispiel einer kreisförmigen Trajektorie, transportiert.

Das vorliegende Ausführungsbeispiel des Transportabschnitts 5 nutzt eine drehbar gelagerte Sortierscheibe 10 mit Aufnahmetaschen 11, um die zunächst zufällig orientierten Behälterverschlüsse 2 in Empfang zu nehmen, in eine definierte Ausrichtung und Teilung zu bringen und entlang des Förderwegs F zu transportieren. Allerdings kann die Ausrichtung der Behälterverschlüsse 2 sowie deren Transport auch auf andere Weise erfolgen, beispielsweise entlang einer linearen Trajektorie. Die Mitnahme der Behälterverschlüsse 2 muss nicht über die Aufnahmetaschen 11 erfolgen, sondern kann beispielsweise über Mitnahmefinger, Transportbänder usw. erfolgen.

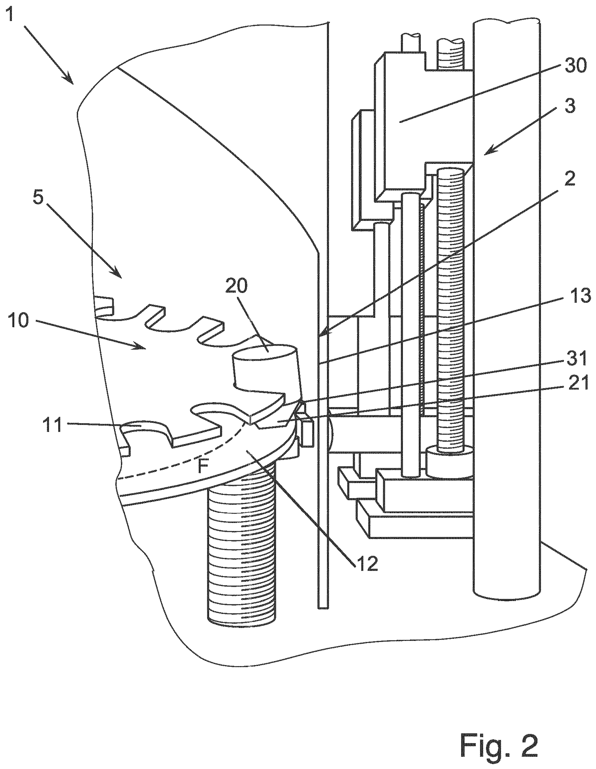

Die Figur 2 zeigt schematisch einen von der Aufnahmetasche 11 in korrekter Ausrichtung aufgenommenen Behälterverschluss 2. Der Behälterverschluss 2 ist vorzugsweise ein Drehverschluss, beispielsweise aus Kunststoff oder Aluminium, und weist in diesem Fall eine rotationssymmetrische Form auf, mit einem Innengewinde für das Aufschrauben auf einen entsprechenden Mündungsabschnitt eines Behälters. Der Behälterverschluss 2 weist vorzugsweise einen (hohl)zylindrischen Abschnitt 20 und einen sich daran anschließenden kegelstumpfförmigen Abschnitt 21 auf.

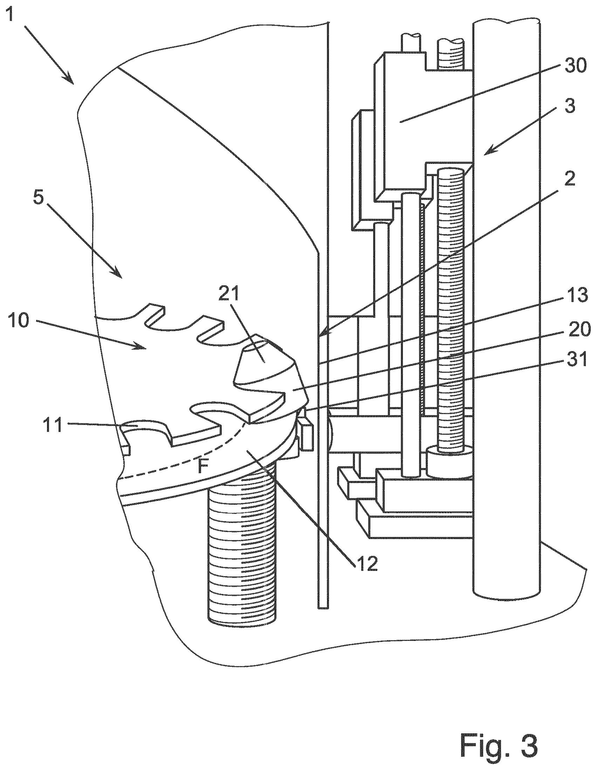

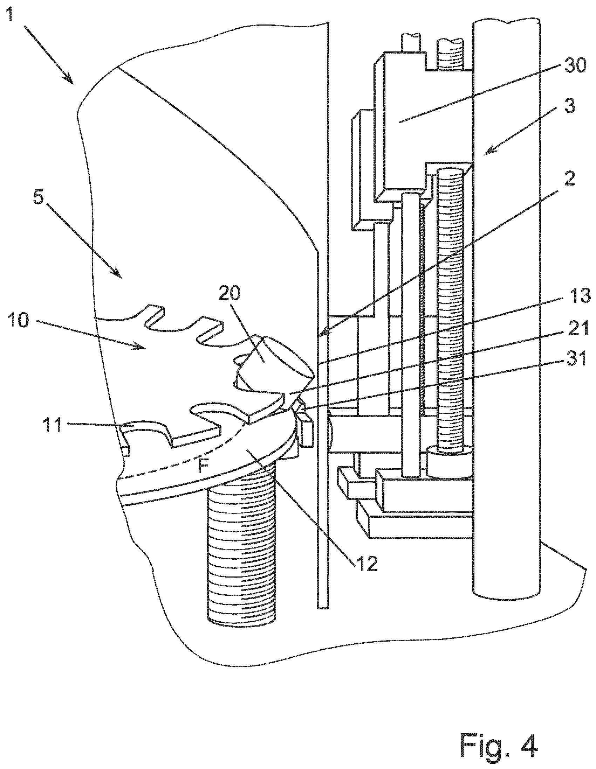

Die Sortiervorrichtung 1 weist eine Korrektureinrichtung 3 auf, die eingerichtet ist, um fehlorientierte Behälterverschlüsse 2 aus der entsprechenden Aufnahmetasche 11 zu entfernen. Unter einer solchen fehlerhaften Ausrichtung fallen beispielsweise ein falschherumstehender Behälterverschluss 2, wie in der Figur 3 gezeigt, und ein querliegender Behälterverschluss 2, wie in der Figur 4 gezeigt.

Die Korrektureinrichtung 3 umfasst einen Blasabschnitt 30, der eine oder mehrere Düsen aufweist und eingerichtet ist, um fehlorientierte Behälterverschlüsse 2 mittels eines Gases, vorzugsweise mittels Luft bzw. Druckluft, aus der entsprechenden Aufnahmetasche 11 herauszublasen. Der Blasabschnitt 30 ist vorzugsweise im Bereich des Außenumfangs der Sortierscheibe 10, radial außerhalb und oberhalb der Sortierscheibe 10 angeordnet, wobei die Düsen so ausgerichtet sind, dass der Gasstrom radial nach innen gerichtet ist, so dass die fehlorientierten Behälterverschlüsse 2 auf die Sortierscheibe 10, tendenziell Richtung Zentrum geblasen werden. Der Blasabschnitt 30 und/oder dessen Düse(n) sind vorzugsweise verstellbar angeordnet.

Die Korrektureinrichtung 3 weist ferner einen Anhebeabschnitt 31 auf, der eingerichtet ist, um den fehlorientierten Behälterverschluss 2 so anzuheben, dass das Herausblasen des Behälterverschlusses 2 durch den Blasabschnitt ermöglicht, unterstützt oder vereinfacht wird. Der Anhebeabschnitt 31 befindet sich vorzugsweise am Außenumfang der Sortierscheibe 10 und ist so eingerichtet, dass der fehlorientierte Behälterverschluss 2 während des Transports durch die Sortierscheibe 10 auf den Anhebeabschnitt 31 aufgeschoben und dadurch auf der entsprechenden Seite angehoben wird.

Der Anhebeabschnitt 31 hat vorzugsweise die Form eines Kurvenelements oder einer Klinge. Der Anhebeabschnitt 31 ist vorzugsweise verstellbar installiert, insbesondere in axialer Richtung der Sortierscheibe 10, so dass der Anhebeabschnitt 31 bei Nichtgebrauch nach unten gefahren werden kann, wie in Figur 1 gezeigt, und keine Wirkung auf die Behälterverschlüsse 2 entfaltet und andernfalls nach oben in eine Arbeitsposition gefahren werden kann, wie in den Figuren 2 bis 4 gezeigt.

Aus einem Vergleich der Figur 2 mit den Figuren 3 und 4 geht hervor, dass der Anhebeabschnitt 31 auf einen korrekt ausgerichteten Behälterverschluss 2 keine anhebende Wirkung entfaltet, während fehlorientierte Behälterverschlüsse 2 durch den Anhebeabschnitt 31 beeinflusst werden. Diese Funktion wird zum einen durch die Form und Lage des Anhebeabschnitts 31, zum anderen durch die Geometrie des Behälterverschlusses 2 erzielt.

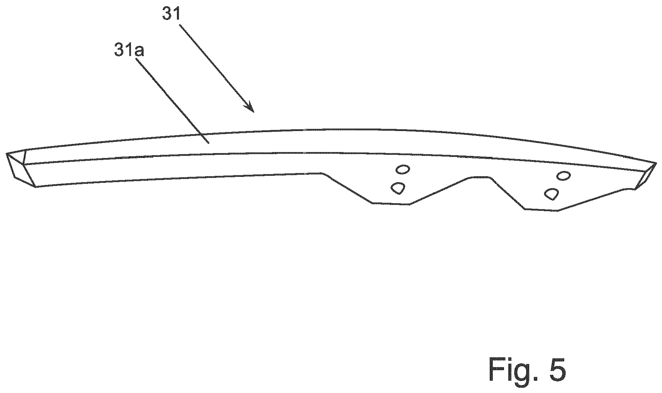

Die Figur 5 zeigt ein Ausführungsbeispiel des Anhebeabschnitts 31, der hier als Kurvenelement aus einem widerstandsfähigen Metall gefertigt ist. An der Oberseite weist der Anhebeabschnitt 31 eine klingenförmige Führung 31a auf, die eine definierte Hubtrajektorie für die fehlorientierten Behälterverschlüsse 2 vorgibt, während die Behälterverschlüsse 2 durch die Sortierscheibe 10 transportiert werden und auf der Bodenplatte 12 entlanggleiten.

Indem der Anhebeabschnitt 31 fehlorientierte Behälterverschlüsse 2 in eine Lage bringt, in welcher der Gasstrom des Blasabschnitts 30 so auf die Behälterverschlüsse 2 wirkt, dass diese aus dem Förderweg F geblasen werden, kann auf einen Sensor zur Detektion von Fehlorientierungen verzichtet werden. In anderen Worten, anstatt einer Verschlusserkennung mittels eines Sensors, ist am Außenumfang der Sortierscheibe 10 beispielsweise ein Anhebeabschnitt 31 in Form einer Anhebekurve installiert. Diese hat den Zweck, falschherumliegende oder querliegende Behälterverschlüsse 2 anzuheben, welche dann mittels einer seitlichen Düse des Blasabschnitts 30 ausgeblasen werden.

Mit einem solchen Anhebeabschnitt 31 sind höhere Leistungen aufgrund höherer Drehzahlen möglich. Zudem können Verschlussgeometrien verarbeitet werden, die mit bisherigen Sortierwerken nicht möglich waren. Die Behälterverschlüsse 2 werden weniger beschädigt, da sie nicht gegen ein Abprallblech geblasen werden.

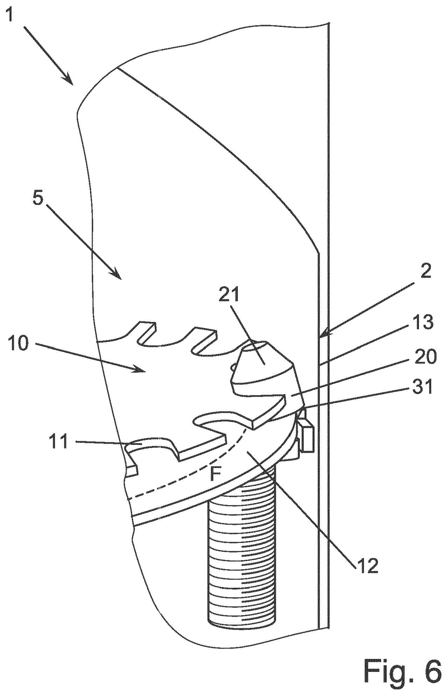

Die Figur 6 zeigt eineweitere Ausführungsform der Vorrichtung 1, die nicht Teil der vorliegenden Erfindung ist und bei welcher der Transportabschnitt 5, insbesondere die Sortierscheibe 10 und die Bodenplatte 12, quer zum Förderweg F geneigt ist, wodurch das Heraustragen fehlorientierter Behälterverschlüsse 2 unterstützt wird. Der Neigungsgrad ist vorzugsweise so eingestellt, dass der fehlorientierte Behälterverschluss 2 durch das Anheben durch den Anhebeabschnitt 31 selbstständig, d.h. insbesondere ohne Herausblasen durch einen Blasabschnitt, aus dem Förderweg F kippt. Es ist somit alternativ möglich, dass fehlorientierte Behälterverschlüsse 2 vollständig aus dem Förderweg gehoben werden. Die Alternative ist insbesondere dann gut umsetzbar, wenn der Schwerpunkt der Behälterverschlüsse 2 von einer geometrischen Mitte stark verschoben ist, beispielsweise wenn sich der Schwerpunkt im Bereich des kegelstumpfförmigen Abschnitts 21 bzw. eines Deckels befindet, so dass der Behälterverschluss 2 schneller über den Kipppunkt kommt als ein korrekt orientierter Behälterverschluss 2.

Das Ausführungsbeispiel der Figur 6 kommt ohne Blasabschnitt 30 aus, und ist somit nicht Teil der vorliegenden Erfindung. Allerdings kann die geneigte Ausführung des Transportabschnitts 5 auch mit einem Blasabschnitt 30 kombiniert werden, um die Zuverlässigkeit des Entfernens fehlorientierter Behälterverschlüsse 2 zu verbessern. Die Schrägstellung des Transportabschnitts 5 (Neigungsgrad) und der Blasabschnitt 30 können je nach Beschaffenheit der Behälterverschlüsse 2 geeignet kombiniert werden.

### Bezugszeichenliste

- 1: Vorrichtung zur Bereitstellung von Behälterverschlüssen
- 10: Sortierscheibe
- 11: Aufnahmetasche
- 12: Bodenplatte
- 13: Außenführung
- 2: Behälterverschluss
- 20: Zylindrischer Abschnitt
- 21: Kegelstumpfförmiger Abschnitt
- 3: Korrektureinrichtung
- 30: Blasabschnitt
- 31: Anhebeabschnitt
- 31a: Führung
- 5: Transportabschnitt

- F: Förderweg

## Patentansprüche

1. Vorrichtung (1) zur orientierten Bereitstellung von Behälterverschlüssen (2), vorzugsweise in einer Getränkeabfüllanlage, wobei die Vorrichtung (1) aufweist:
einen Transportabschnitt (5), der eingerichtet ist, um die Behälterverschlüsse (2) entlang eines Förderwegs (F) zu transportieren, und eine in Drehung versetzbare Sortierscheibe (10) mit am Außenumfang angeordneten Aufnahmetaschen (11) aufweist, wobei die Aufnahmetaschen (11) eingerichtet sind, um je einen Behälterverschluss (2) aufzunehmen; und
eine Korrektureinrichtung (3), die eingerichtet ist, um einen fehlorientierten Behälterverschluss (2) aus dem Förderweg (F) zu entfernen;
**dadurch gekennzeichnet, dass**
die Korrektureinrichtung (3) einen Anhebeabschnitt (31) aufweist, der eingerichtet ist, um den fehlorientierten Behälterverschluss (2) für das Entfemen aus dem Förderweg (F) anzuheben;
die Korrektureinrichtung (3) einen Blasabschnitt (30) aufweist, der eingerichtet ist, um den fehlorientierten Behälterverschluss (2) mittels eines Gasstroms aus dem Förderweg (F) zu blasen, und der Anhebeabschnitt (31) eingerichtet ist, um den fehlorientierten Behälterverschluss (2) für das Ausblasen aus dem Förderweg (F) anzuheben; und
der Blasabschnitt (30) radial außerhalb der Sortierscheibe (10) angeordnet und so eingerichtet ist, dass der Gasstrom radial nach innen gerichtet ist, so dass der fehlorientierte Behälterverschluss (2) auf die Sortierscheibe (10) geblasen wird.

2. Vorrichtung (1) nach Anspruch 1, **dadurch gekennzeichnet, dass** der Blasabschnitt (30) eingerichtet ist, um den fehlorientierten Behälterverschluss (2) mittels eines Luftstroms aus dem Förderweg (F) zu blasen.

3. Vorrichtung (1) nach Anspruch 1 oder 2, **dadurch gekennzeichnet, dass** die am Außenumfang angeordneten Aufnahmetaschen (11) halbrunde Ausnehmungen sind.

4. Vorrichtung (1) nach einem der vorigen Ansprüche, **dadurch gekennzeichnet, dass** der Transportabschnitt (5) eine unterhalb der Sortierscheibe (10) angeordnete Bodenplatte (12) aufweist, auf der die von den Aufnahmetaschen (11) aufgenommenen Behälterverschlüsse (2) aufliegen und durch Drehung der Sortierscheibe (10) entlang eines kreisförmigen Förderwegs (F) transportiert werden.

5. Vorrichtung (1) nach einem der vorigen Ansprüche, **dadurch gekennzeichnet, dass** der Anhebeabschnitt (31) am Außenumfang der Sortierscheibe (10) angeordnet und so eingerichtet ist, dass der fehlorientierte Behälterverschluss (2) während des Transports durch die Sortierscheibe (10) zumindest abschnittsweise auf den Anhebeabschnitt (31) aufgeschoben und dadurch entsprechend angehoben wird.

6. Vorrichtung (1) nach einem der vorigen Ansprüche, **dadurch gekennzeichnet, dass** der Anhebeabschnitt (31) als Kurvenelement mit einer klingenförmigen Führung (31a), die während des Anhebens des fehlorientierten Behälterverschlusses (2) mit diesem in Kontakt steht, ausgebildet ist.

7. Vorrichtung (1) nach einem der vorigen Ansprüche, **dadurch gekennzeichnet, dass** der Anhebeabschnitt (31) verstellbar angeordnet ist, vorzugsweise in axialer Richtung der Sortierscheibe (10), wobei der Anhebeabschnitt (31) vorzugsweise in eine Arbeitsposition, in welcher der Anhebeabschnitt (31) den fehlorientierten Behälterverschluss (2) anhebt, und eine Ruheposition, in welcher der Anhebeabschnitt (31) keine Wirkung auf den fehlorientierten Behälterverschluss (2) entfaltet, verfahrbar ist.

8. Vorrichtung (1) nach einem der vorigen Ansprüche, **dadurch gekennzeichnet, dass** die Korrektureinrichtung (3) so eingerichtet ist, dass der Anhebeabschnitt (31) einen korrekt ausgerichteten Behälterverschluss (2) nicht anhebt, während der fehlorientierte Behälterverschluss (2) durch den Anhebeabschnitt (31) angehoben wird.

9. Vorrichtung (1) nach einem der vorigen Ansprüche, **dadurch gekennzeichnet, dass** kein Sensor zur Detektion fehlorientierter Behälterverschlüsse (2) vorgesehen ist.

10. Vorrichtung (1) nach einem der vorigen Ansprüche, **dadurch gekennzeichnet, dass** der Transportabschnitt (5) quer zum Förderweg (F) geneigt ist, wobei der Neigungsgrad vorzugsweise so vorgesehen ist, dass der fehlorientierte Behälterverschluss (2) durch das Anheben durch den Anhebeabschnitt (31) selbstständig, bevorzugt ohne Blasen, aus dem Förderweg (F) kippt.

11. Verfahren zur orientierten Bereitstellung von Behälterverschlüssen (2), vorzugsweise in einer Getränkeabfüllanlage, wobei das Verfahren aufweist:
Transportieren der Behälterverschlüsse (2) entlang eines Förderwegs (F) mittels eines Transportabschnitts (5), wobei der Transportabschnitt (5) eine in Drehung versetzte Sortierscheibe (10) mit am Außenumfang angeordneten Aufnahmetaschen (11), die je einen Behälterverschluss (2) aufnehmen, aufweist;
Entfernen eines fehlorientierten Behälterverschlusses (2) aus dem Förderweg (F) mittels einer Korrektureinrichtung (3);
**gekennzeichnet durch**
Anheben des fehlorientierten Behälterverschlusses (2) für das Entfernen aus dem Förderweg (F) mittels eines Anhebeabschnitts (31);
wobei
der fehlorientierte Behälterverschluss (2) mittels eines Gasstroms eines Blasabschnitts (30) aus dem Förderweg (F) geblasen wird, wobei der fehlorientierte Behälterverschluss (2) für das Ausblasen aus dem Förderweg (F) mittels des Anhebeabschnitts (31) angehoben wird; und
der Blasabschnitt (30) radial außerhalb der Sortierscheibe (10) angeordnet und so eingerichtet ist, dass der Gasstrom radial nach innen gerichtet ist, so dass der fehlorientierte Behälterverschluss (2) auf die Sortierscheibe (10) geblasen wird.

12. Verfahren nach Anspruch 11, **dadurch gekennzeichnet, dass** der fehlorientierte Behälterverschluss (2) mittels eines Luftstroms des Blasabschnitts (30) aus dem Förderweg (F) geblasen wird.

13. Verfahren nach Anspruch 11 oder 12, **dadurch gekennzeichnet, dass** dieses mit einer Vorrichtung nach einem der Ansprüche 3 bis 10 durchgeführt wird.

14. Verfahren nach einem der Ansprüche 11 bis 13, **dadurch gekennzeichnet, dass** die Behälterverschlüsse (2) Drehverschlüsse, vorzugsweise aus Kunststoff oder Aluminium, mit einer rotationssymmetrischen Form sind, wobei die Behälterverschlüsse (2) vorzugsweise jeweils einen hohlzylindrischen Abschnitt (20) und einen sich daran anschließenden kegelstumpfförmigen Abschnitt (21) aufweisen.

## Claims

1. A device (1) for oriented provision of container closures (2), preferably in a beverage filling system, wherein the device (1) has:
a transport portion (5), which is configured to transport the container closures (2) along a conveying path (F), and a sorting disc (10), which can be set into rotation, with receiving pockets (11) disposed on the outer circumference, wherein the receiving pockets (11) are configured to receive one container closure (2) each; and
a correction device (3), which is configured to remove an incorrectly oriented container closure (2) from the conveying path (F);
**characterised in that**
the correction device (3) has a lifting portion (31), which is configured to lift the incorrectly oriented container closure (2) so that it can be removed from the conveying path (F);
the correction device (3) has a blowing portion (30), which is configured to blow the incorrectly oriented container closure (2) out of the conveying path (F) by means of a gas stream, and the lifting portion (31) is configured to lift the incorrectly oriented container closure (2) so that it can be blown out of the conveying path (F); and
the blowing portion (30) is disposed radially outside the sorting disc (10) and is configured such that the gas stream is directed radially inwards such that the incorrectly oriented container closure (2) is blown onto the sorting disc (10).

2. The device (1) according to claim 1, **characterised in that** the blowing portion (30) is configured to blow the incorrectly oriented container closure (2) out of the conveying path (F) by means of an air stream.

3. The device (1) according to claim 1 or 2, **characterised in that** the receiving pockets (11) disposed on the outer circumference are semicircular recesses.

4. The device (1) according to any one of the preceding claims, **characterised in that** the transport portion (5) has a base plate (12) which is disposed below the sorting disc (10) and on which the container closures (2) received by the receiving pockets (11) rest and are transported along a circular conveying path (F) by way of rotation of the sorting disc (10).

5. The device (1) according to any one of the preceding claims, **characterised in that** the lifting portion (31) is disposed on the outer circumference of the sorting disc (10) and is configured such that the incorrectly oriented container closure (2) is pushed at least in portions onto the lifting portion (31) during transport by the sorting disc (10) and is thereby lifted accordingly.

6. The device (1) according to any one of the preceding claims, **characterised in that** the lifting portion (31) is configured as a cam element with a blade-shaped guide (31a), which is in contact with the incorrectly oriented container closure (2) while it is lifted.

7. The device (1) according to any one of the preceding claims, **characterised in that** the lifting portion (31) is disposed so as to be adjustable, preferably in the axial direction of the sorting disc (10), wherein the lifting portion (31) can preferably be moved to a working position in which the lifting portion (31) lifts the incorrectly oriented container closure (2), and a rest position in which the lifting portion (31) has no effect on the incorrectly oriented container closure (2).

8. The device (1) according to any one of the preceding claims, **characterised in that** the correction device (3) is configured such that the lifting portion (31) does not lift a correctly aligned container closure (2) while the incorrectly oriented container closure (2) is lifted by the lifting portion (31).

9. The device (1) according to any one of the preceding claims, **characterised in that** no sensor is provided for detecting incorrectly oriented container closures (2).

10. The device (1) according to any one of the preceding claims, **characterised in that** the transport portion (5) is inclined transversely to the conveying path (F), wherein the degree of inclination is preferably provided such that the incorrectly oriented container closure (2) tilts out of the conveying path (F) independently, preferably without blowing, when lifted by the lifting portion (31).

11. A method for oriented provision of container closures (2), preferably in a beverage filling system, wherein the method includes:
transporting the container closures (2) along a conveying path (F) by means of a transport portion (5), wherein the transport portion (5) has a sorting disc (10), which is set into rotation, with receiving pockets (11) disposed on the outer circumference, each of which receives a container closure (2);
removing an incorrectly oriented container closure (2) from the conveying path (F) by means of a correction device (3);
**characterised by**,
lifting the incorrectly oriented container closure (2) so that it can be removed from the conveying path (F) by means of a lifting portion (31);
wherein the incorrectly oriented container closure (2) is blown out of the conveying path (F) by means of a gas stream of a blowing portion (30), wherein the incorrectly oriented container closure (2) is lifted by means of the lifting portion (31) so that it can be blown out of the conveying path (F); and
the blowing portion (30) is disposed radially outside the sorting disc (10) and is configured such that the gas stream is directed radially inwards such that the incorrectly oriented container closure (2) is blown onto the sorting disc (10).

12. The method according to claim 11, **characterised in that** the incorrectly oriented container closure (2) is blown out of the conveying path (F) by means of an air stream of the blowing portion (30).

13. The method according to claim 11 or 12, **characterised in that** the method is carried out with a device according to any one of claims 3 to 10.

14. The method according to any one of claims 11 to 13, **characterised in that** the container closures (2) are rotary closures, preferably made of plastic or aluminium, having a rotationally symmetrical shape, wherein the container closures (2) preferably each have a hollow cylindrical portion (20) and an adjoining frustoconical portion (21).

## Revendications

1. Dispositif (1) de fourniture orientée de fermetures de récipients (2), de préférence dans une installation de remplissage de boissons, dans lequel le dispositif (1) présente :
une section de transport (5) qui est configurée pour transporter les fermetures de récipients (2) le long d'un trajet de convoyage (F) et qui présente un disque de tri (10) orientable en rotation avec des poches de réception (11) disposées sur la circonférence extérieure, dans lequel les poches de réception (11) sont configurées pour recevoir chacune une fermeture de récipient (2) ; et
un dispositif de correction (3) configuré pour retirer une fermeture de récipient (2) mal orientée du trajet de convoyage (F) ;
**caractérisé en ce que**
le dispositif de correction (3) présente une section de levage (31) qui est configurée pour soulever la fermeture de récipient (2) mal orientée pour le retirer du trajet de convoyage (F) ;
le dispositif de correction (3) présente une section de soufflage (30) qui est configurée pour souffler la fermeture de récipient (2) mal orientée hors du trajet de convoyage (F) au moyen d'un flux de gaz, et la section de levage (31) est configurée pour soulever la fermeture de récipient (2) mal orientée pour le souffler hors du trajet de convoyage (F) ; et
la section de soufflage (30) est disposée radialement à l'extérieur du disque de tri (10) et est configurée de sorte que le flux de gaz soit dirigé radialement vers l'intérieur de sorte que la fermeture de récipient (2) mal orientée soit soufflée sur le disque de tri (10).

2. Dispositif (1) selon la revendication 1, **caractérisé en ce que** la section de soufflage (30) est configurée pour souffler la fermeture de récipient (2) mal orientée à partir du trajet de convoyage (F) au moyen d'un flux d'air.

3. Dispositif (1) selon la revendication 1 ou la revendication 2, **caractérisé en ce que** les poches de réception (11) disposées sur le pourtour extérieur sont des évidements demi-ronds.

4. Dispositif (1) selon l'une quelconque des revendications précédentes, **caractérisé en ce que** la section de transport (5) présente une plaque de fond (12) disposée en dessous du disque de tri (10), sur laquelle reposent les fermetures de récipients (2) reçues par les poches de réception (11) et sont transportées par rotation du disque de tri (10) le long d'un trajet de convoyage (F) circulaire.

5. Dispositif (1) selon l'une quelconque des revendications précédentes, **caractérisé en ce que** la section de levage (31) est disposée sur la circonférence extérieure du disque de tri (10) et est configurée de sorte que la fermeture de récipient (2) mal orientée soit poussée au moins par sections sur la section de levage (31) pendant le transport à travers le disque de tri (10) et est ainsi soulevée en conséquence.

6. Dispositif (1) selon l'une quelconque des revendications précédentes, **caractérisé en ce que** la section de levage (31) est formée en tant qu'élément courbe avec un guidage en forme de lame (31a) qui est en contact avec celle-ci pendant le levage de la fermeture de récipient (2) mal orientée.

7. Dispositif (1) selon l'une quelconque des revendications précédentes, **caractérisé en ce que** la section de levage (31) est disposée de manière réglable, de préférence dans la direction axiale du disque de tri (10), dans lequel la section de levage (31) peut de préférence être déplacée dans une position de travail, dans laquelle la section de levage (31) soulève la fermeture de récipient (2) mal orientée, et dans une position de repos, dans laquelle la section de levage (31) ne déploie aucun effet sur la fermeture de récipient (2) mal orientée.

8. Dispositif (1) selon l'une quelconque des revendications précédentes, **caractérisé en ce que** le dispositif de correction (3) est configuré de sorte que la section de levage (31) ne soulève pas une fermeture de récipient (2) correctement orientée, tandis que la fermeture de récipient (2) mal orientée est soulevée par la section de levage (31).

9. Dispositif (1) selon l'une quelconque des revendications précédentes, **caractérisé en ce qu'**aucun capteur n'est prévu pour la détection de fermetures de récipients (2) mal orientées.

10. Dispositif (1) selon l'une quelconque des revendications précédentes, **caractérisé en ce que** la section de transport (5) est inclinée perpendiculairement au trajet de convoyage (F), dans lequel le degré d'inclinaison est de préférence prévu de sorte que la fermeture de récipient (2) mal orientée bascule de manière autonome, préférablement sans soufflage, hors du trajet de convoyage (F) par le soulèvement par la section de levage (31).

11. Procédé de fourniture orientée de fermetures de récipients (2), de préférence dans une installation de remplissage de boissons, dans lequel le procédé présente :
le transport des fermetures de récipients (2) le long d'un trajet de convoyage (F) au moyen d'une section de transport (5), dans lequel la section de transport (5) présente un disque de tri (10) décalé en rotation avec des poches de réception (11) disposées sur la circonférence extérieure, qui reçoivent chacune une fermeture de récipient (2) ; le retrait d'une fermeture de récipient (2) mal orientée du trajet de convoyage (F) à l'aide d'un dispositif de correction (3) ;
**caractérisé par**
le soulèvement de la fermeture de récipient (2) mal orientée pour le retirer du trajet de convoyage (F) au moyen d'une section de levage (31) ;
dans lequel la fermeture de récipient (2) mal orientée est soufflée hors du trajet de convoyage (F) au moyen d'un flux de gaz d'une section de soufflage (30), dans lequel la fermeture de récipient (2) mal orientée est soulevée pour être soufflée hors du trajet de convoyage (F) au moyen de la section de levage (31) ; et
la section de soufflage (30) est disposée radialement à l'extérieur du disque de tri (10) et est configurée de sorte que le flux de gaz soit dirigé radialement vers l'intérieur de sorte que la fermeture de récipient (2) mal orientée soit soufflée sur le disque de tri (10).

12. Procédé selon la revendication 11, **caractérisé en ce que** la fermeture de récipient (2) mal orientée est soufflée hors du trajet de convoyage (F) au moyen d'un flux d'air de la section de soufflage (30).

13. Procédé selon la revendication 11 ou la revendication 12, **caractérisé en ce que** celui-ci est réalisé avec un dispositif selon l'une quelconque des revendications 3 à 10.

14. Procédé selon l'une quelconque des revendications 11 à 13, **caractérisé en ce que** les fermetures de récipients (2) sont des fermetures rotatives, de préférence en matière plastique ou en aluminium, de forme symétrique en rotation, dans lequel les fermetures de récipients (2) présentent de préférence chacune une section cylindrique creuse (20) et une section conique émoussée (21) contiguë à celle-ci.
